# EUROPEAN PATENT APPLICATION

(11) **EP 0 645 726 A2**
(43) Date of publication of application: **29.03.1995**
(21) Application number: 94307060.7
(22) Date of filing: 27.09.1994
(51) Int. Cl.: G06F 17/60

(54) **Annotation of the displays of a multiple computer system**

(30) Priority: 28.09.1993 US 128013
(71) Applicant: NCR International, Inc., Dayton, Ohio 45479 (US)
(72) Inventor: Carleton, Allison A., Chicago Illinois 60622 (US); Connet, David R., Batavia, Illinois 60510 (US); Schwartz, Krista S., Batavia, Illinois 60510 (US)
(74) Representative: Robinson, Robert George

(57) **Abstract**

In a computer system including a plurality of interlinked computers, one computer generates a common image which is distributed to the other computers. Users of the computers can annotate the common image by highlighting, drawing lines, and/or typing text. The annotations are replicated on the other computers. The highlighting may be transparent or opaque and may be effected by moving a cursor to leave a coloured trail.

## Description

This invention relates to a computer system including a plurality of interlinked computers.

Modern telephone systems allow different locations to hold a conference. However, telephone conferences do not provide all of the conveniences of a face-to-face conference, where participants all meet at a common table in a meeting room. For example, in a meeting room, participants can view an object of interest, such as a drawing or a product. Such viewing is not possible in a telephone conference.

It is an object of the present invention to provide a computer system including a plurality of interlinked computers, wherein a common image displayed on the computer may be annotated in an efficient manner.

Therefore, according to the present invention, there is provided a computer system including a plurality of interlinked computers, characterized by annotation means adapted to allow users of the computers to make annotations on the common image by highlights on the common image; and storage means adapted to store annotation data at a different location from image data.

One embodiment of the present invention will now be described by way of example, with reference to the accompanying drawings, in which:-

Figure 1 illustrates three computers, connected by telephone lines.

Figure 2 initiates an example, which will be elaborated in Figures 3 - 14. In the example, a calculator program is operated, and annotated, by various parties.

Figure 3 illustrates how the system responds when a host user attempts to operate the calculator, in Annotation mode.

Figure 4 illustrates how the system responds when a host user attempts to annotate the calculator, in Annotation mode.

Figure 5 illustrates how the system responds when a host user attempts to operate the calculator, in Application mode.

Figure 6 illustrates how the system responds when a host user attempts to operate the calculator, in Local Annotation mode.

Figure 7 illustrates how the system responds when a host user attempts to annotate the calculator, in Local Annotation mode.

Figure 8 illustrates how the system responds to a host user when in View mode.

Figure 9 illustrates how the system responds when a remote user attempts to operate the calculator, in Annotation mode.

Figure 10 illustrates how the system responds when a remote user attempts to annotate the calculator, in Annotation mode.

Figure 11 illustrates how the system responds when a remote user attempts to operate the calculator, in Application mode.

Figure 12 illustrates how the system responds when a remote user attempts to operate the calculator, in Local Annotation mode.

Figure 13 illustrates how the system responds when a remote user attempts to annotate the calculator, in Local Annotation mode.

Figure 14 illustrates how the system responds to a remote user when in View mode.

Figures 15 and 15A illustrate logic flow used by the invention.

Figure 16 illustrates how text may be drawn in pixel format.

Figure 17 illustrates how a loop, drawn in the same color as the text, may be drawn around a letter of the text of Figure 16, but which obscures neighbouring letters.

Figure 18 illustrates how a loop, drawn in a different color than the text, still obscures neighbouring letters of the text in Figure 16.

Figure 19 illustrates ANDing the loop color with the text color, to avoid the obstruction.

Figure 20 illustrates another type of ANDing.

Figures 21 and 22 illustrate a type of highlighting.

Figures 23 - 25 illustrate annotation using text and graphics as annotation tools.

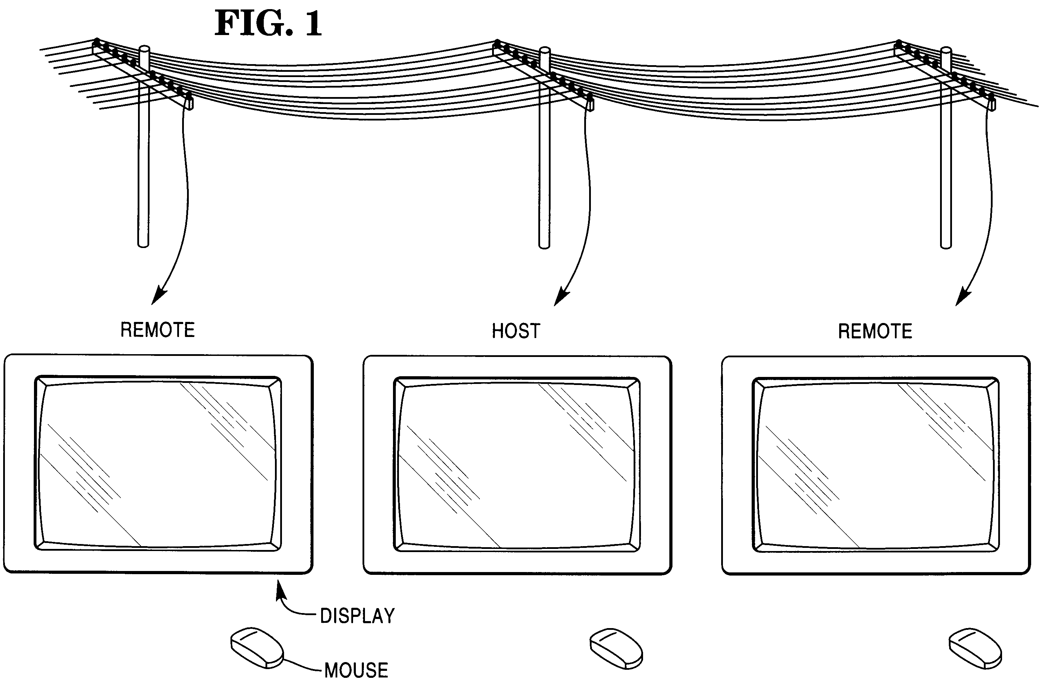

Figure 1 shows three computers connected by telephone links. Each computer runs a message-driven, multi-tasking, Graphical User Interface (GUI), such as that sold under the name Windows, available from Microsoft Corporation, located in Redmond, Washington. Such GUIs are also called operating environments.

The user of a GUI interacts with a program by way of windows. Selected windows, rather than the entire display, are replicated at the remote computers. This selective replication allows users to maintain private areas on their displays, which are not shared. Each computer also runs software which effects the operations described herein. In addition, one computer (the Host) runs an Application program. (It is possible for the Host to run both programs because of the multi-tasking capabilities of the GUI.)

There are four basic modes of operation:

### 1. Application Mode

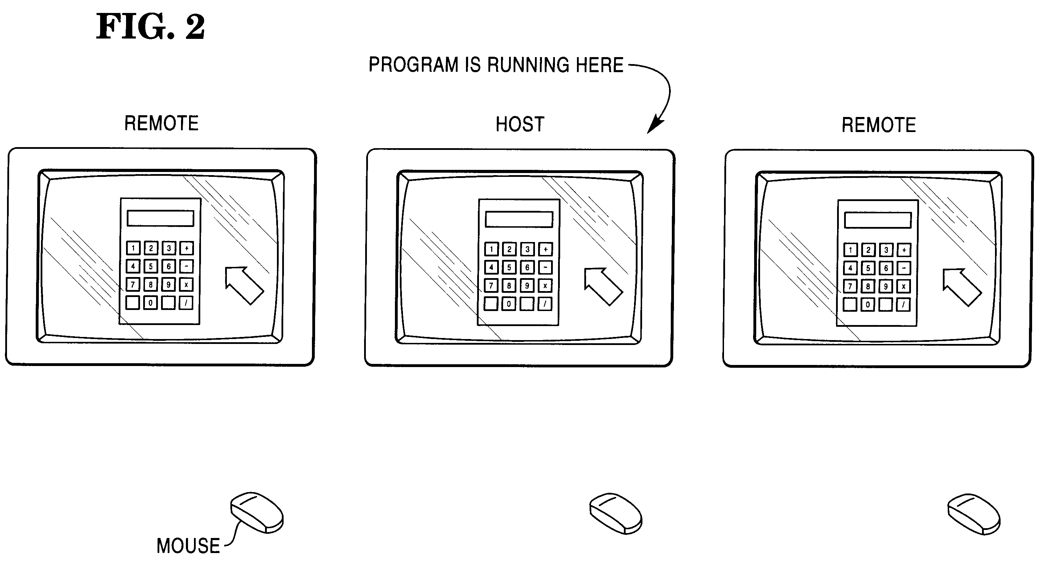

Any user of any of the three computers in Figure 1 can issue commands to the Application program. For example, assume the Application program is one which simulates a hand-held calculator. The initial situation is shown in Figure 2, where each computer display shows the calculator. Assume that the following events occur:

The user of the Host presses the "3" button on the calculator (either by keyboard input, or mouse input, depending upon the design of the calculator program).

In response, each calculator, in its display area, shows a "3".

The user of one Remote presses "+".

The user of the other Remote presses "6".

The user of the Host presses "=".

At this point, all calculators will display "9", which is the sum of 3 and 6. The users collectively operated the calculator program, and the display of each shows the result.

The calculator program does not care which users pressed the buttons, nor whether some users pressed no buttons, provided a legal sequence of buttons was received. (It is assumed that the users are cooperative, and that no users try to sabotage operation of the calculator.)

### 2. Annotation Mode

Any user can draw on the user's own, local, display, using drawing tools similar to those found in a "paint" program. The user can draw boxes, circles, arcs, text, ellipses, and so on. The user can also erase items on the display.

The user's annotations are replicated on all other displays, so that all users view similar displays. However, the displays could be different, because of the following factors:
(A) Different display monitors have different properties, such as resolution and color capability.
(B) Different display protocols (EGA, VGA, etc.) represent graphics images differently, and have different color capabilities.
(C) Different GUIs, or different versions of the same GUI, may have different display conventions. Different computers in Figure 1 could run the different GUIs.
(D) Some users have changed the size of the window in which their calculator is displayed, causing a deviation in scaling.

These differences can cause differences in the appearance of the displayed images, relative to each other, but the basic content of all displays should be the same. To accommodate size differences, the displays may be drawn to different scales as appropriated.

### 3. Local Annotation Mode

A user can annotate the local display, but the annotations are kept private, and no other user can see the annotations.

### 4. View Mode

No users can annotate, nor can they issue commands. However, an action resembling annotation can be taken. Users can move their cursors, and others will see the movement, allowing remote pointing. View Mode is useful in one embodiment, wherein, for example, Annotate Mode is in force, but a specific user's mode is designated as View. In this embodiment, all users can annotate, but the "View" user can only watch, and cannot annotate.

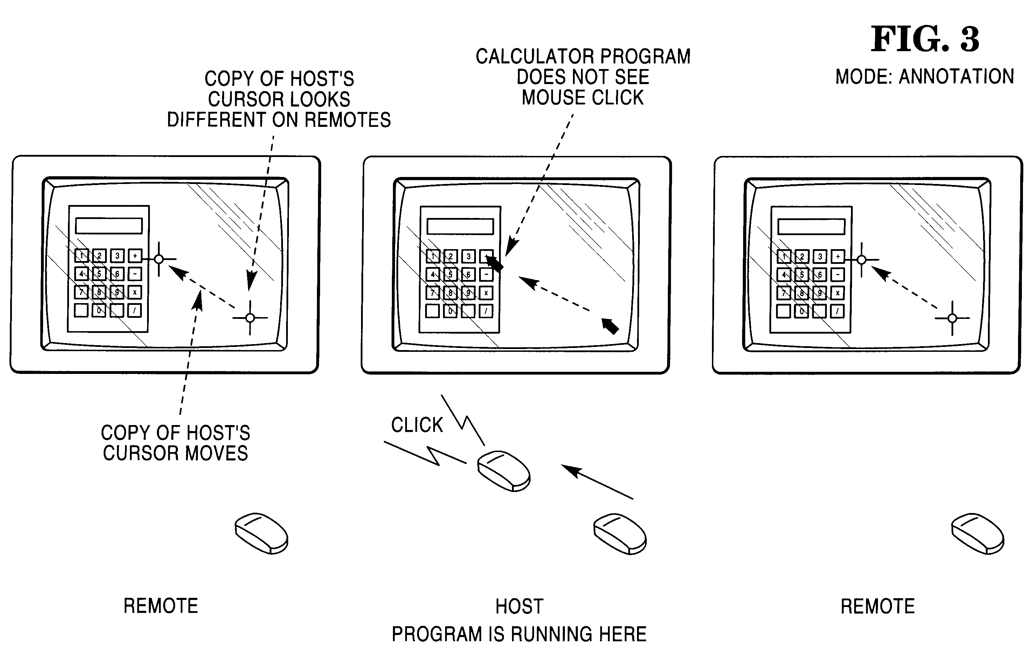

Figures 3-14 will illustrate the different modes, by way of example, using the calculator program.

Referring to Figure 3, there is shown the situation where the host runs on application program; the mode is "Annotation"; the user input is at the host computer; and the user attempts to operate the calculator.

Assume that the user of the host computer attempts to add two numbers, using the calculator. Attempted entry of the first number will be considered.

The user, located at the Host, moves the Host's cursor over a key of the calculator, as shown in Figure 3, and tries to depress the key, by clicking the mouse. However, the mouse click is blocked and does not reach the Application program. The Application program does not respond, because it receives no mouse click.

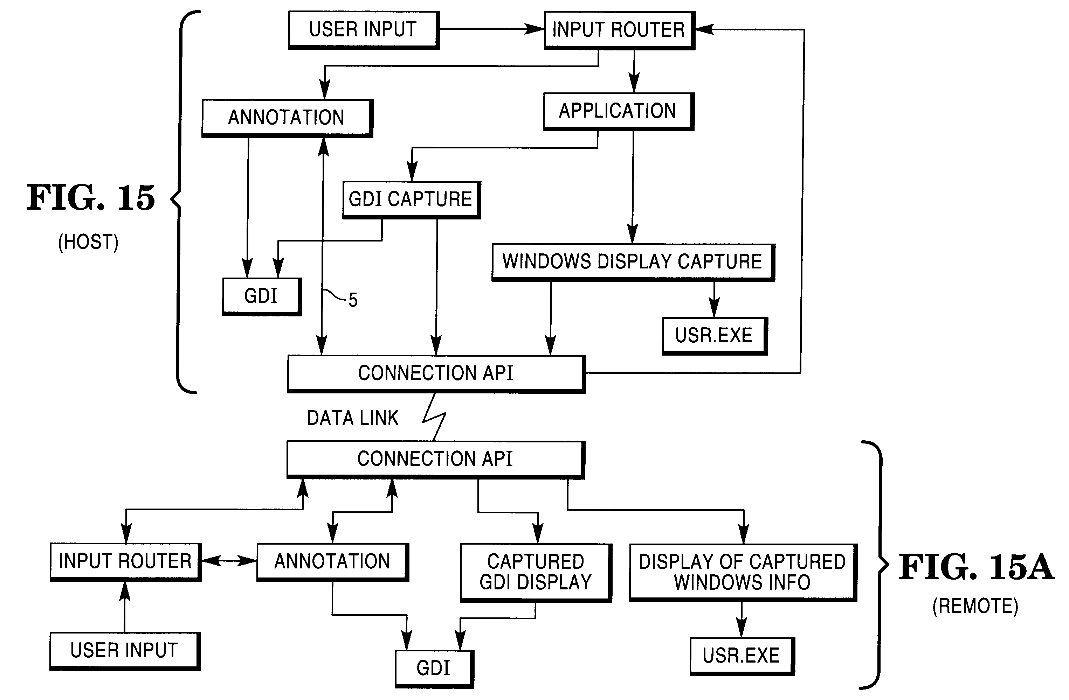

That is, in more detail, the GUI detects the mouse movement, and causes "mouse messages" to be generated. The GUI places the mouse messages into a queue, where they await processing. INPUT ROUTER in Figure 15 reads these messages. Because "Annotation Mode" is currently in force, INPUT ROUTER directs the messages to ANNOTATION block. APPLICATION does not receive the messages and thus does not respond. The mouse click is ignored.

ANNOTATION can be configured to respond to two (or more) ways to the mouse messages. In one configuration, annotation requires the mouse to initially select an ANNOTATION TOOL. If no selection is done, ANNOTATION ignores mouse messages.

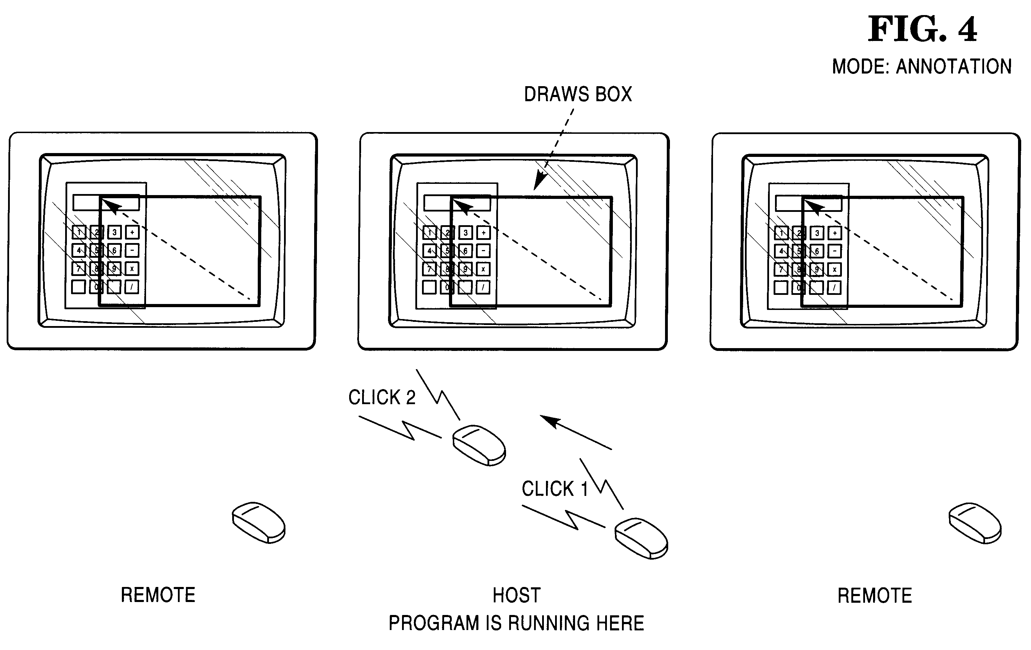

Selection is done by clicking the mouse over an image of the tool, as is commonly done in "paint" programs. ANNOTATION recognizes this tool selection, and then treats subsequent mouse clicks as data for drawing with the selected tool. For example, if a rectangle tool were selected, the next two mouse clicks would define the diagonal corners of the rectangle. (Figure 4, later discussed, illustrates drawing a rectangle.)

Under the second configuration, a default tool, such as a pen, is automatically selected when in Annotation Mode. In this configuration, when the user tries to depress a calculator button (by clicking on it), the user (unintentionally) initiates drawing of a line, using the pen. When the user recognizes this, the user can terminate drawing of the line, in any of several known ways.

Therefore, in Annotation Mode, the system either (a) responds to mouse input by initiating a draft annotation, or (b) ignores the mouse input, because an annotation tool was not selected. Keyboard input from the user is treated the same way. Of course, other responses by ANNOTATION can be designed.

Each display shows a cursor whose position is controlled by the associated mouse. Each cursor is replicated on all displays. Thus, in Figure 3, with three mice, there are three cursors on each display (only one is shown for simplicity). Consequently, when one user moves a mouse, the corresponding cursor moves on all displays. In general, the three cursors are distinguishable: each cursor identifies its owner, as by color, shape, inclusion of a label, or the like.

Referring to Figure 4, there is shown the situation where the host runs an application program; the mode is "Annotation"; the user input is at the host computer; and the user attempts to draw a box over the calculator.

This situation is quite similar to that of Figure 3, except that, now, the user intends to draw an annotation, instead of intending to press a button, as in Figure 3.

Assume that the user of the host computer draws a box over the calculator. (The box is shown overly large, for emphasis. It is preferred that the box not extend beyond the calculator itself.) The box is replicated on the remote computers. (The box is drawn using annotation tools, which are not shown.)

In terms of Figure 15, INPUT ROUTER directs the logic flow to ANNOTATION. ANNOTATION call the proper GDI functions to draw the box. Also, ANNOTATION sends "annotation messages" to CONNECTION API, which delivers the annotation messages to the Remotes.

ANNOTATION in Figure 15A receives the annotation messages. This ANNOTATION block represents the logic executed at each remote computer. This ANNOTATION calls the proper GDI functions, via the block GDI.

"GDI" is an acronym for Graphical Device Interface. "GDI functions" are small programs, contained in a larger program of the GUI called GDI.EXE. A GDI function, when called, draws a specific graphic image, such as a circle, box, or text, based on subsequent input from the user. Other GDI functions perform other tasks, such as selecting pen widths.

GDI.EXE is a commercially available product. Technical details concerning GDI.EXE are contained in "Windows Software Development Kit," available from Microsoft Corporation, and in Programming Windows 3.1 by Charles Petzold (Microsoft Press, Redmond, Washington, 1992, ISBN 1-55615-395-3).

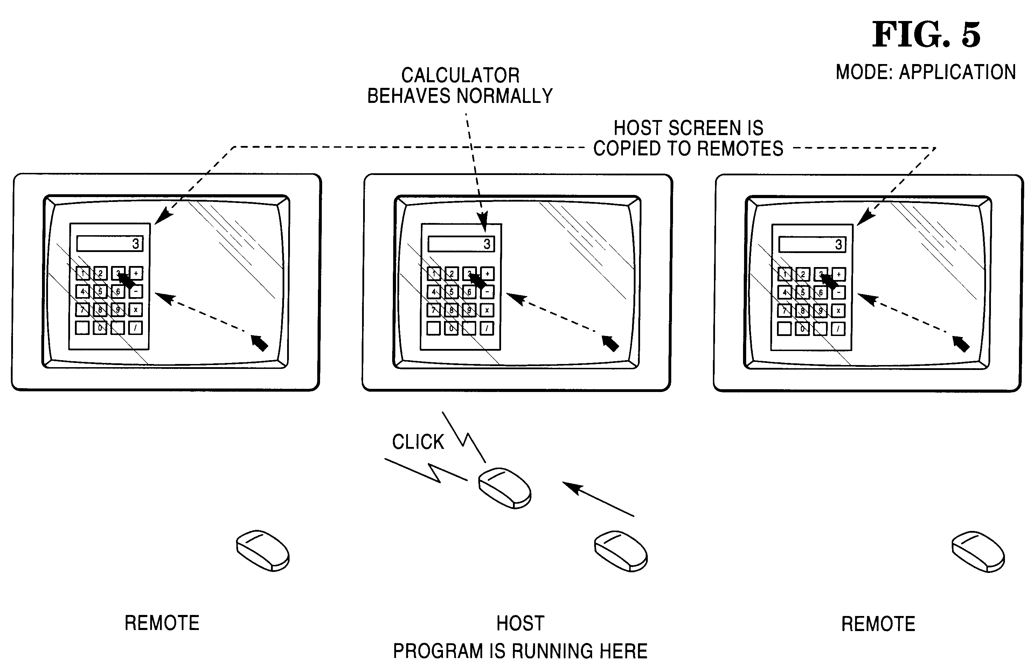

Referring to Figure 5, there is shown the situation where the host runs an application program; the mode is "Application"; the user input is at the host computer; and the user attempts to use the calculator.

The user of the Host moves the cursor over the calculator key "3" and clicks the mouse. The GUI generates a mouse message and places it into the queue. The mouse message is read, and passed to the Application program (ie, the calculator program), which responds by (1) showing that the key "3" is depressed and (2) drawing the numeral "3" in the calculator's display, using-GDI calls. The Application program also records the fact that the user enters a "3", for its own internal operations.

The GDI calls made by the Application program in drawing the "3" in the calculator, and in drawing the depressed "3" button are intercepted, and notified to the other computers. The other computers replicate the Host display, by executing the same GDI functions. Greater detail concerning this GDI interception is given later.

Thus, all users simultaneously see the user of the Host operate the calculator. (The action is not exactly simultaneous, because extremely short delays are involved. However, a human probably could not detect the delays if the Host and the Remote were operating side-by-side.)

In terms of Figure 15, the INPUT ROUTER recognizes that the mouse messages should be directed to the Application program, and directs the logic flow to APPLICATION (ie, the calculator program). APPLICATION (1) draws a depressed "3" key and (2) writes the numeral "3" on the calculator's display, by calling appropriate GDI functions.

However, the system, via GDI CAPTURE in Figure 15, captures the Application program's GDI calls, before they are executed. Two things are done with the captured calls. One, the other computers are notified of these calls, via the block CONNECTION API. This action leads to block CAPTURED GDI DISPLAY in Figure 15A, which causes each Remote to execute the same GDI functions, as indicated by block GDI. Two, the system allows the GDI functions, called by the Application program, to be executed at the host, via the block GDI in Figure 15. Therefore, GDI function calls made by the Application Program are captured and notified to the Remote computers, so that the Remotes can duplicate them. The captured calls are then executed as intended on the Host.

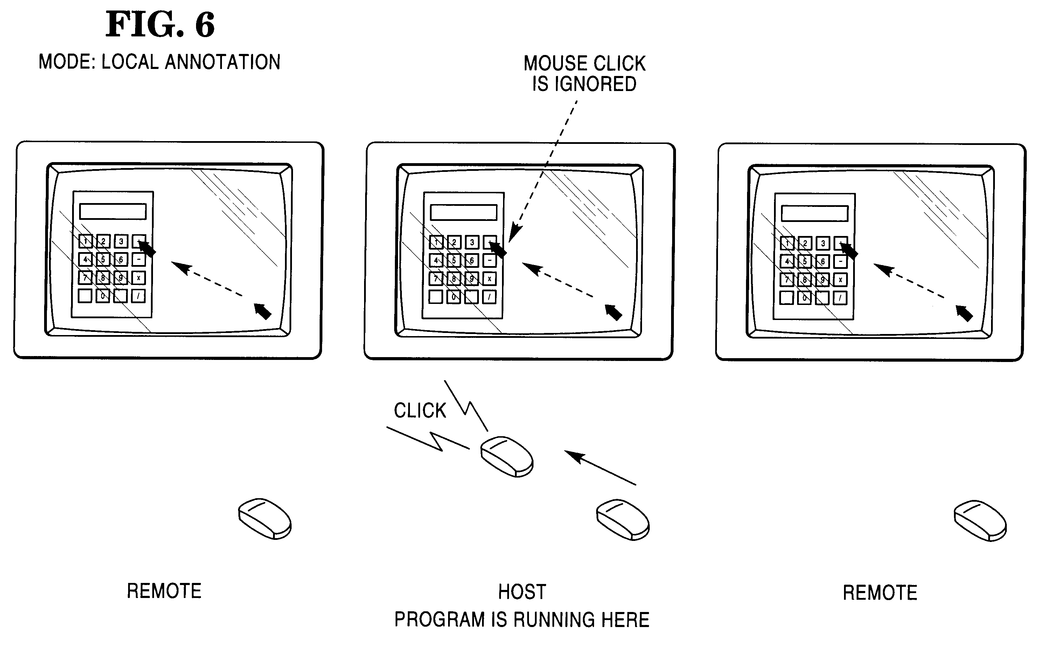

Referring to Figure 6, there is known the situation where the host runs an application program; the mode is "Local Annotation"; the user input is at the host computer; and the user attempts to operate the calculator.

Assume that in Annotation Mode, there is no default annotation tool given to the user. Under this assumption, if the user moves the cursor to a calculator button, and tries to "press" the button, the INPUT ROUTER in Figure 15 passes the mouse message to the annotation block. Since the mouse click is not part of a valid annotation input sequence (no tool was selected), ANNOTATION draws nothing. Further, the Remote computers do not show the movement of the cursor corresponding to the Host computer's mouse, as indicated, because line 5 in Figure 15 does not send Annotation Messages to the other computers when Local Annotation is in force. Further still, the calculator button is not re-drawn as a depressed button on the Host display, in response to the attempt to press it, because APPLICATION did not receive the mouse message. APPLICATION is responsible for drawing depressed calculator buttons.

If a default annotation is assigned to the user in Local Annotation Mode, the user's mouse click would initiate drawing by that tool. When the user realized the mistake, the user would terminate the drawing, in a known manner.

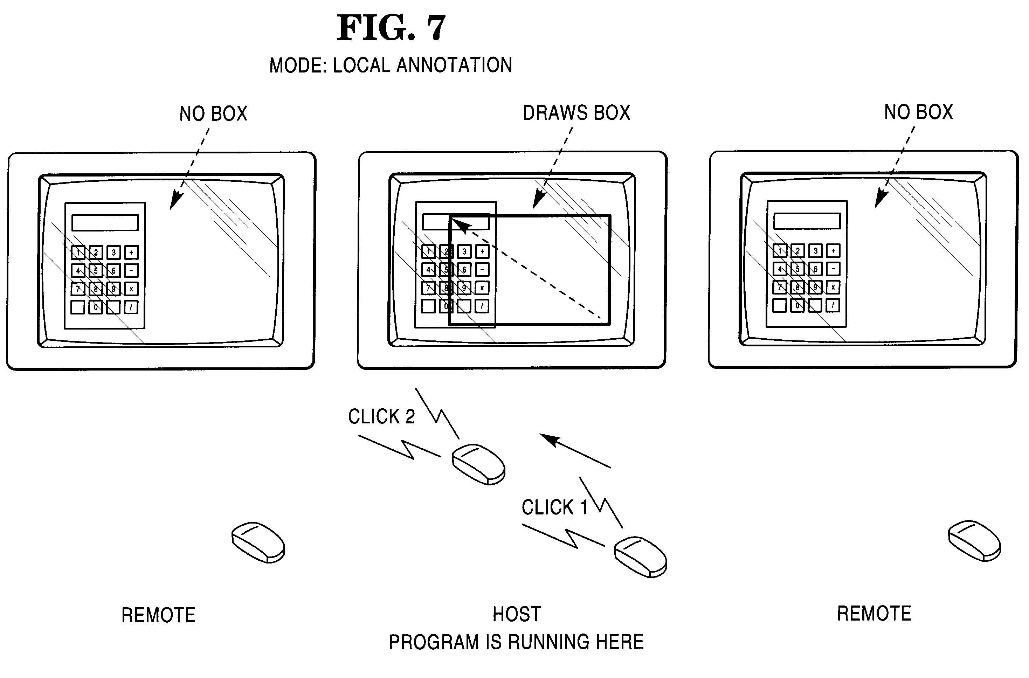

Referring to Figure 7, there is shown the situation where the host runs an application program; the mode is "Local Annotation"; the user input is at the host computer; and the user attempts to annotate the calculator. Under these conditions, the INPUT ROUTER in Figure 15 recognizes a valid attempt to perform annotation, as by drawing a box. The INPUT ROUTER directs the logic flow to the ANNOTATION block, which calls the proper GDI functions for drawing the annotation, namely, a box, as shown in Figure 7. However, because the annotation is local, no boxes are drawn on remote computers, as indicated in Figure 7. No data is sent along data path 5 in Figure 15.

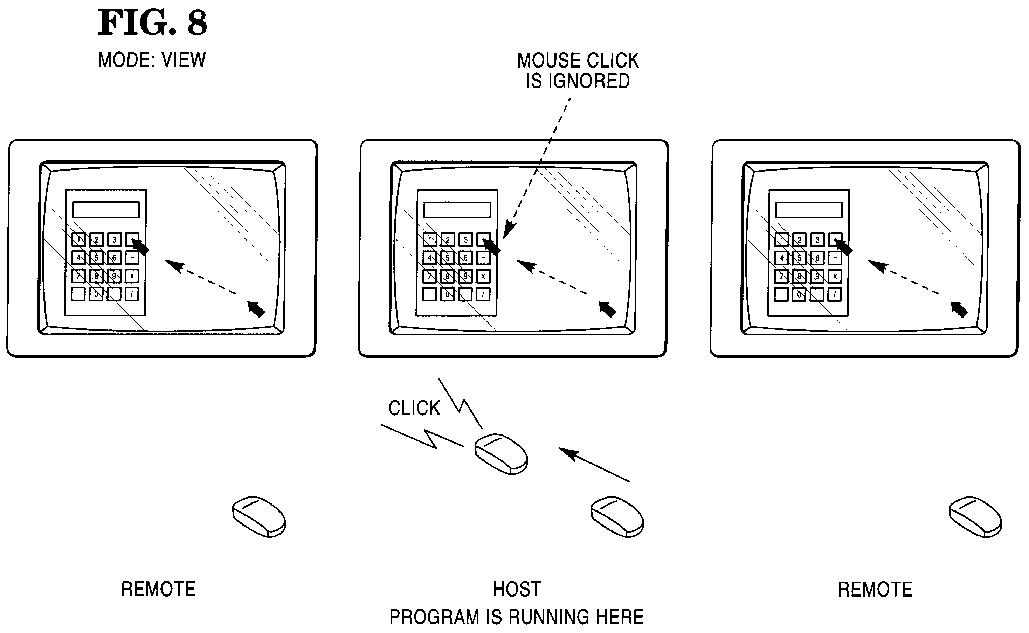

Referring to Figure 8, there is shown the situation where the host runs an application program; the mode is "View"; the user input is at the host computer; and the user attempts to operate the calculator. As Figure 8 indicates, the mouse click is ignored, and nothing happens at the Remotes. In Figure 15, the INPUT ROUTER reads the mouse message, but blocks it from APPLICATION, because the current mode is "view."

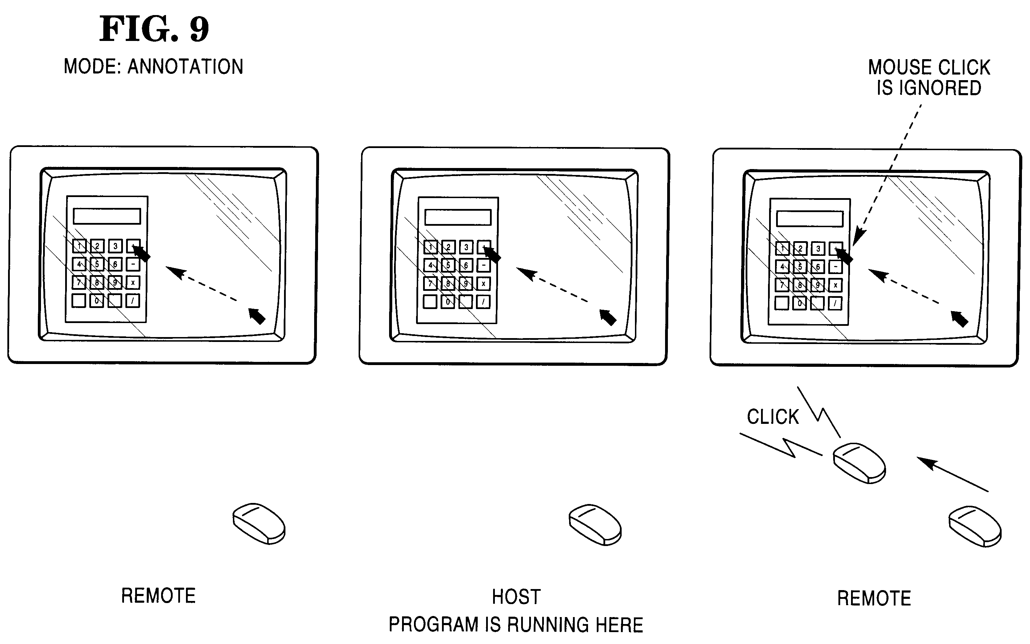

Referring to Figure 9, there is shown the situation where the host runs an application program; the mode is "ANNOTATION"; the user input is at a remote computer; and the user attempts to operate the calculator.

Assume that the user moves the mouse cursor over a calculator button and clicks the mouse. The mouse click is ignored. The other computers (Host and the other Remote) show the motion of the user's cursor, but nothing else, because no tool has been selected. In Figure 15A, the INPUT ROUTER blocks the mouse message from reaching APPLICATION. The logic is directed to ANNOTATION, which draws a cursor on the user's Remote display, via block GDI. ANNOTATION also sends data to CONNECTION API, which directs the logic to ANNOTATION in Figure 15. This ANNOTATION represents the annotation logic present on the two other computers: the Host and the other Remote. These ANNOTATION blocks draw cursors corresponding to the users cursor, at corresponding positions, via the GDI block in Figure 15, which represents GDI function calls. The Host can use one tool, such as a box-drawing tool, while a Remote can use a different tool, such as a circle-drawing tool.

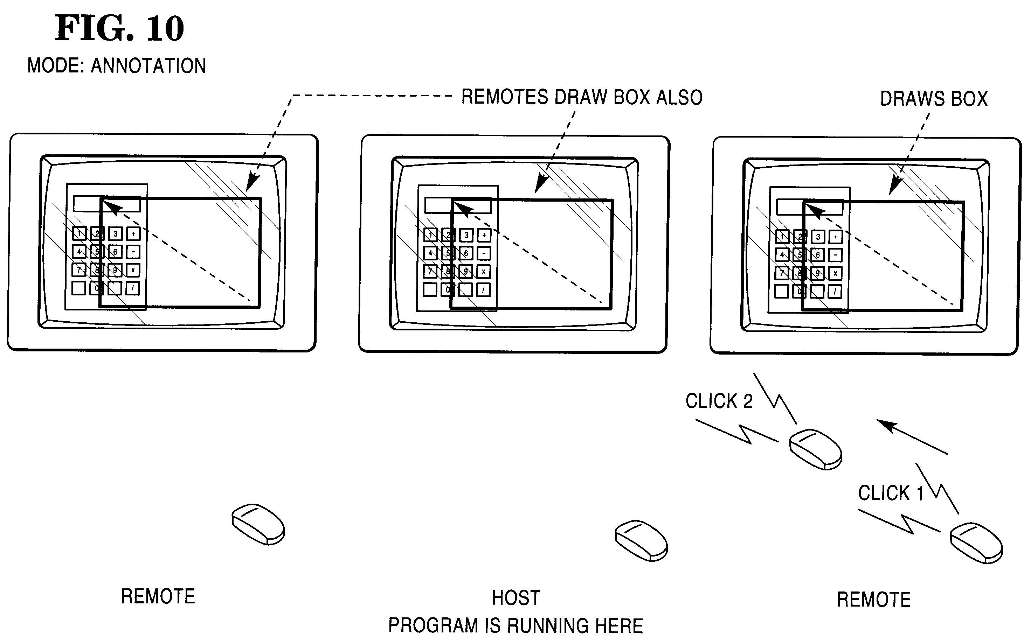

Referring to Figure 10, there is shown the situation where the host run an application program; the mode is "ANNOTATION"; the user input is at a remote computer; and the user attempts to annotate the calculator. Assume that the annotation is a box. A box is drawn on all displays. In Figure 15A, the INPUT ROUTER at the user's Remote directs the mouse messages to the block ANNOTATION. ANNOTATION does two things. One, it calls the proper GDI functions to perform the annotation, namely, drawing the box. Two, ANNOTATION sends annotation messages to CONNECTION API, which delivers the annotation messages to the other computers. However, one of these is the Host, and the other is a Remote. The logic at the Host reaches ANNOTATION in Figure 15, and the logic at the other Remote reaches ANNOTATION in Figure 15A.

Both of these ANNOTATION blocks cause the proper GDI functions to be called, to draw an annotation corresponding to the user's annotation. However, in the Host, logic path 5 is not taken at this time, because it is not necessary to replicate the Host's annotations at other computer.

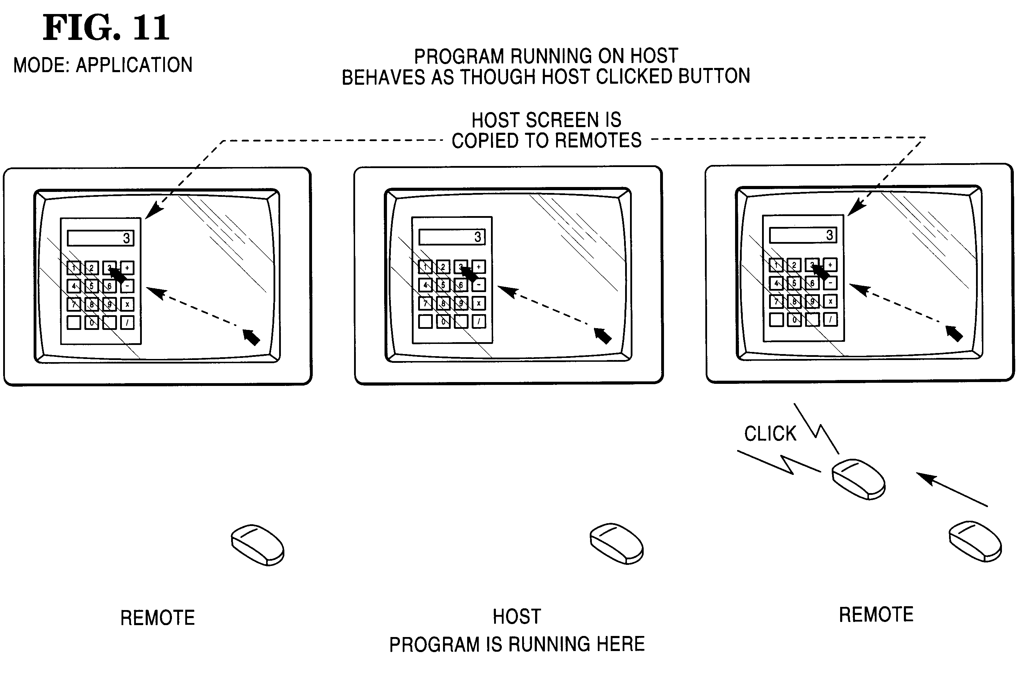

Referring to Figure 11, there is shown the situation where the host runs an application program; the user input is at a remote computer; and the user attempts to operate the calculator. It will be recalled that the calculator program is loaded only on the host, while a Remote user wishes to operate it.

The Remote user's INPUT ROUTER in Figure 15A routes the mouse messages to CONNECTION API. The Host receives these messages, which are delivered to the Host's INPUT ROUTER in Figure 15. The Host's INPUT ROUTER directs the messages to the block APPLICATION (ie, to the Application program, namely, the calculator program), which does two important things.

The calculator program treats the messages as though they were issued by the Host's mouse, even though a Remote mouse caused them. The calculator program responds in its usual way, which includes (1) showing a depressed calculator button "3", (2) writing the numeral "3" in the calculator's display, and (3) performing its own internal computations when it learns that the user entered data (namely, the "3").

However, before the calculator program can execute (1) and (2) in the previous paragraph, the system first captures the GDI functions which the calculator program calls. This capture is illustrated in block GDI CAPTURE in Figure 15. During this capture, the system, in effect, does two things. One, it sends these GDI functions to CONNECTION API (for the other computers to use). At the user's Remote, CONNECTION API in Figure 15A directs the GDI functions to CAPTURED GDI DISPLAY, which replicates the Host's display. Two, it causes the GDI functions to be executed at the Host (via block GDI in Figure 15). Therefore, the general sequence of events is the following:

The Remote user attempts to press a calculator button.

The software running on the Remote detects this attempt, and sends data to the calculator program running on the host. The data takes the form of messages which the calculator program "thinks" come from the Host's mouse.

The calculator program performs as usual, and draws images on the Host display, via GDI calls.

The system captures the GDI calls, and informs the Remotes of them.

The Remotes replicate the Host's window. The Remote user thus can remotely operate the calculator program running on the Host.

Summarizing in a different way: mouse messages are generated at the Host, based on mouse messages at the Remote. The calculator program (running on the Host) responds to the mouse messages as though they were generated at the Host. The GDI calls made by the calculator program are intercepted, and executed at the Remote, thereby replicating the Host's display at the Remote.

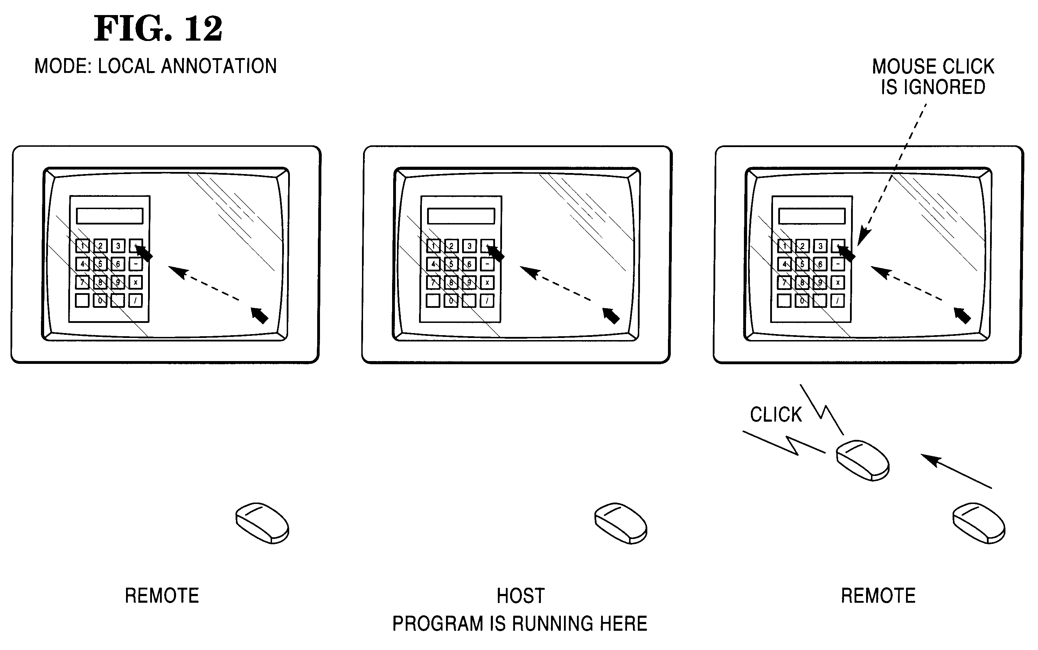

Referring to Figure 12, there is shown the situation where the host runs an application; the mode is "Local Annotation", the user input is at a remote computer, and the user attempts to operate the calculator. The user's mouse click is ignored. Nothing appears on the other displays in response to the mouse movement, because of failure to select a tool.

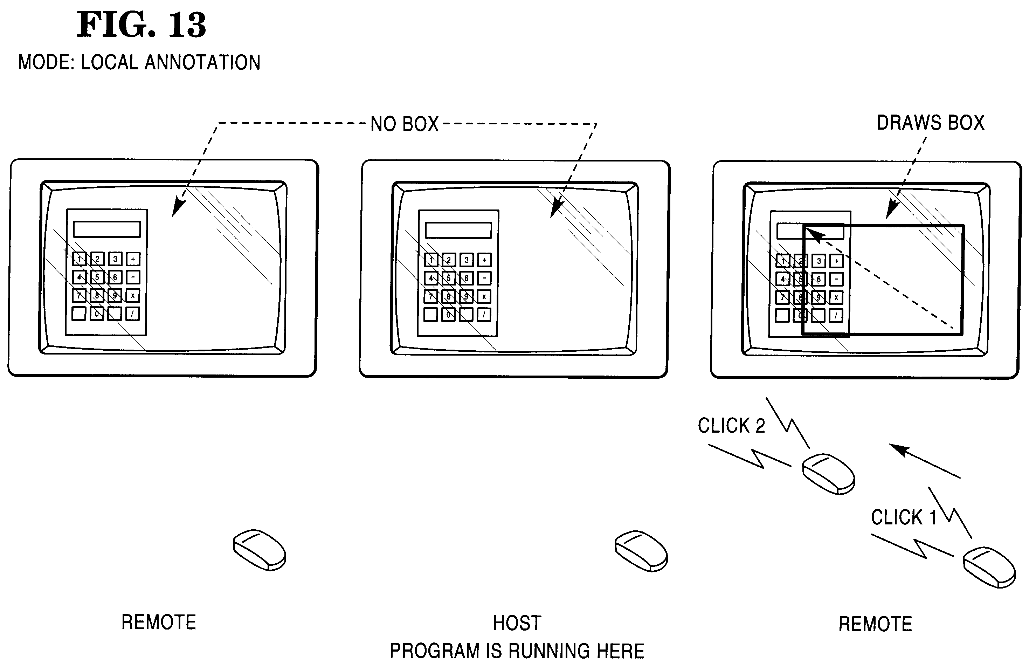

Referring to Figure 13, there is shown the situation where the host runs an application program; the mode is "Local Annotation"; the user input is at a remote computer; and the user attempts to annotate the calculator. The annotation is drawn on the user's display, as indicated. No annotation occurs on the other displays.

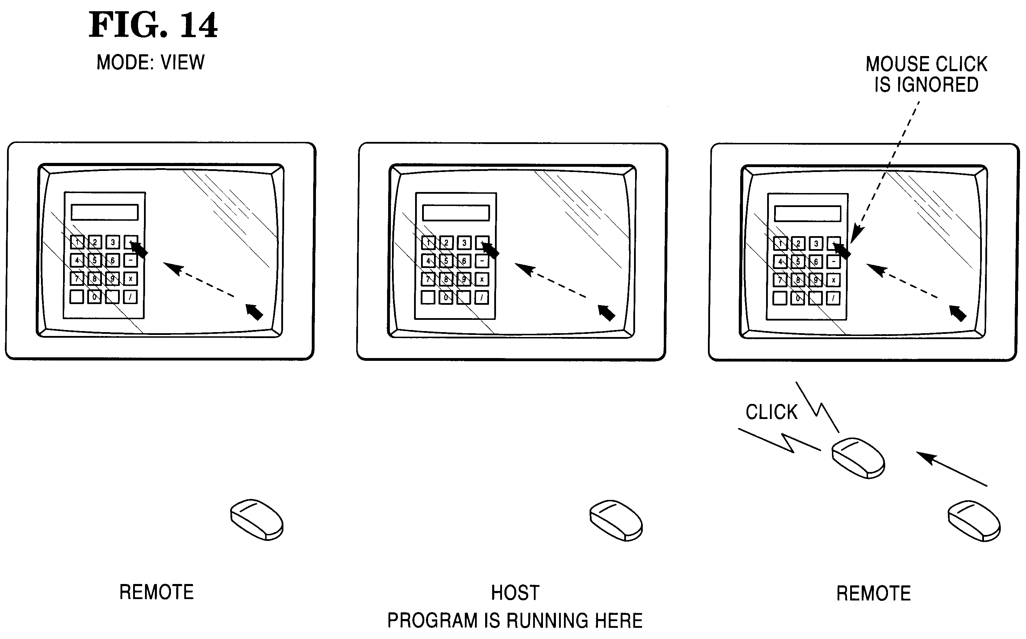

Referring to Figure 14, there is shown the situation where the host runs an application program; the mode is "View"; the user input is at a remote computer; and the user attempts to operate the calculator. As indicated, the mouse cursor moves at the user's display, but the mouse click is ignored. Further, the other two displays show the movement of the user's mouse cursor.

With regard to the above situation descriptions, the following points should be noted. The displays are drawn using GDI functions. However, different parts of a display are drawn by different programs.

Despite the fact that all these drawing operations are undertaken using GDI functions GDI functions are not the exclusive medium of communication between computers for replicating the displays. For example, when a user performs annotation, the user's mouse messages are replicated, as messages, at the other computers, via path 5 in Figure 15. These replicated messages then cause the respective ANNOTATION blocks (at the other computers) to issue the proper GDI calls for drawing the annotation. That is, GDI calls are not send directly from the user performing the annotation to the other computers.

In contrast, when an application program causes a graphic image to be drawn on a display, GDI calls are intercepted via GDI CAPTURE in Figure 15) and caused to be replicated on the other computers.

A major reason for the two different procedures (replicating mouse messages and replicating GDI calls) is that annotations are stored in memory at different locations than the display information. That is, returning to the calculator of Figure 2, the Application program stores the image of the calculator in the following general way. Annotation data is stored. Application program data is stored by the Application program (at the host). Each image of a key is stored as data from which a GDI function can draw the key. The data includes information such as position, size, color, and so on. Each key includes an associated number. The number can be stored as a text character, with information as to position, size, font type, and so on. Annotation data is stored at a different location, but in the same general way. If either the annotation or the Application program needs bitmaps, the bitmaps are stored in a conventional, known manner, by the GUI.

The annotation images are combined with the Application's images by the known technique of masking. That is, at a Remote, the received GDI functions are executed into a bitmap. The received annotation information is executed into a different bitmap. The two bitmaps are masked together. The annotation data is kept separate from the application data so that, for example, a user can save an Application image, but without annotations. Alternatively, a user can save annotation data alone, or save an annotated display.

As another example, keeping the annotation data separate facilitates drawing a display having no annotation data. If the annotation data were intermingled with the calculator image data, elimination of the annotation data would be difficult, if not impossible. If GDI calls were transmitted exclusively (ie. no message replication were undertaken), then extra effort would be required to construct annotation data for separate storage.

GDI interception can be understood as follows.
A. On start-up, the first five bytes of each GDI function are replaced with a JUMP instruction to a particular program, namely, Trap.GDI.
B. Trap.GDI gets the parameters for the desired graphics image (eg. in the case of a box, the locations of the two diagonal corners) and calls the sub-program PkgDispCall. Trap.GDI also replaces the first five bytes.
C. PkgDispCall accepts the parameters from Trap.GDI and generates an object structure. This object structure is a block of data containing everything necessary for the other computers to draw the box.
   For example, the object structure contains information as to size and position of the box. Further the GUI draws images within a "context". The context includes things such as pen width, color, and other features. The contexts of the individual computers are tracked. If the context of the box drawn is different from the contexts of the remote computers, PkgDispCall includes data necessary for the other computers to create the correct contexts.
D. The object structure is shipped to the other computers, which then execute the same GDI functions.
E. The invention executed the original GDI functions.

The displays are not replicated bit-by-bit. For example, the image of the calculator in Figure 2 could be transferred between computers in bitwise fashion. If the calculator occupied a space of 200 x 300 pixels, then information regarding 60,000 (ie. 200 x 300) pixels must be sent.

Instead, the particular calculator image shown in Figure 2 is treated as eighteen rectangles, plus a text character for each of sixteen of the rectangles, giving a total of 34 objects. Each object requires parameters, such as size and position. The number of parameters is small, in the range of three to ten. Assuming ten parameters, then 340 pieces of data must be sent. Of course, the size of each piece depends on many factors, but a small number of bytes for each piece may be assumed.

Therefore, the 60,000 pieces of data needed for bitwise replication once reduced to 340 pieces maximum for object replication. Of course, some objects may take the form of bitmaps, and must be sent bit-by-bit. However, in general, bitmaps are expected to be rare. Further, it is expected that, in general, bitmaps, when sent, need be sent only once. Also, the object data is compressed when possible. That is, every transmission between computers is of compressed data, when possible. Compression is known in the art.

Communication among computers can take several forms. Commercially available networks, local and wide area, can be used. Commercially available ISDN telephone service, provided by local telephone companies, can be used. Modem communication can be used. There are commercially available packages which detect messages generated by the GUI in response to an input device. One such package is WINSIGHT, available from Borland International.

An alternative approach to the graphics capture described above is the following. The system-provided GDI is replaced by a separate procedure which processes GDI calls before calling the actual system GDI. The system GDI name is changed to prevent confusion between the two modules. The same technique is also used on USR.EXE to also capture GDI calls made through system-provided modules.

A given computer can act as a Host for one program and a Remote for another. For example, one computer can run a word processing program. Another computer can run a CAD drawing program. Each is Host for its respective program.

Since the software on each computer is identical, or substantially identical, all users can run either the word processing program or the CAD program, in the manner described above.

There are two types of "cursor". Each GUI generates its own "real" cursor. The real cursor is not generated by GDI functions, but by an independent function in the GUI. The reader can view the cursor as a bitmap which the GUI moves in response to mouse motion.

In addition to the real cursor, which is controlled by the local mouse, the system generates a "pseudo" cursor for each remote participant. The pseudo cursors are generated using GDI functions.

Sometimes a real cursor changes shape as the cursor moves. For example, it can take the form of an arrow when lying on a tool bar, and then change to a hand when lying on a client area. Sometimes this change is under the control of the Application program. Therefore, if Remote user is controlling an Application program running on a Host machine (as in Figure 11), the Application program may change the cursor on the Host machine, but without using GDI calls. Consequently, the GDI capture of Figures 15 and 15A will be ineffective to replicate the changes on the Remote display.

To confront this problem, the system watches for the functions which change the real cursor (eg. the SetCursor command). The cursor change is replicated on the Remote computer. One way is to execute the same SetCursor command. An alternative approach would be to change the Remote cursor by executing a proper sequence of GDI calls, or to draw a bitmap, when the Host cursor changes.

It should be understood that the system only replicates windows which the user of a display identifies. That is, the user can keep a workspace, such as a notepad, private during a conference. GDI calls use a task handle. If the task handle does not refer to a shared item, the GDI calls are not shared.

The storage of annotation data at a different location from the data for the window annotated has several important ramifications. For example, when a document is annotated, the original document (and the window displaying it) remains intact, and is not corrupted by the annotation. In this connection, it is important to distinguish between a physical document, which usually takes the form of a sheet of paper, and the document under present discussion. The latter type of document does not refer to a physical sheet of paper. Rather, this document refers to a pattern of bits stored on magnetic media, such as a tape or disc, or stored within a computer. This bit pattern, although itself intangible, can be called a document, because a tangible copy can easily be derived from it. (A computer video display or a printer produce tangible copies.)

The annotations are also bit patterns, but stored at a different location than the document. To display the annotated document, the computer combines the annotations with the document on the display by a process known as masking. Masking is somewhat analogous to the overlaying of a transparent sheet, containing the annotations, atop the paper document. The two combined entities (transparent sheet and paper document) produce a composite image.

This overlay analogy points to a problem. That is, in the analogy, if (a) the transparent sheet contains annotations which are opaque, and (b) these opaque annotations lie directly above an image on the document, the underlying image will be concealed by the opaque annotation.

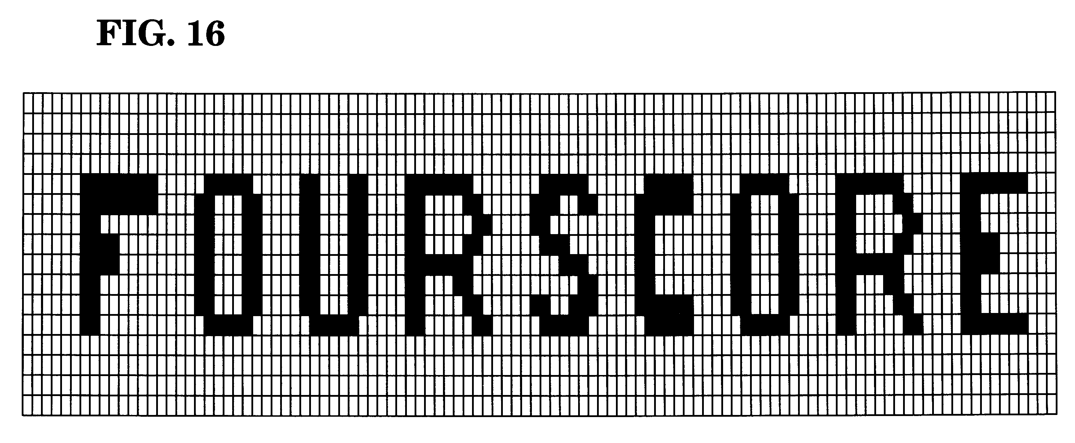

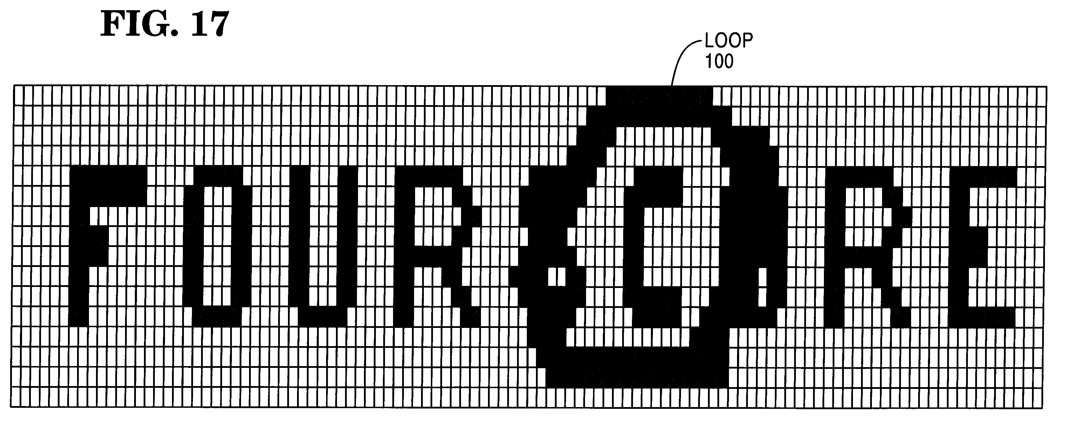

A similar type of concealment can occur in generating a computer display. The computer display is composed of pixels. For example, displays having pixel arrays of 640 x 480, or even 1048 x 748 pixels are common. Figure 16 illustrates the text word "FOURSCORE" as it may appear, in written pixels, on a computer display. Assume that a conference participant annotates this text, by drawing a loop 100 around the letter "C", as in Figure 17.

The participant can draw the loop 100 in at least two ways. The participant can use a circle drawing function, which requires the participant to specify two points, such as the center and a point on the circumference. In this case, the loop is a perfect circle, and the thickness of the line composing the loop is a selected number of pixels.

Figure 17 shows the second way. The participant selects a Highlight function in Annotation Mode. The Highlight function draws a swath trailing from the cursor. The participant sweeps the cursor in a loop, and the trailing swath forms the loop shown in Figure 17.

The two functions treat the color of the drawn line differently. The circle drawing function draws a circle having a fixed color which is the same over the entire circumference. In contrast, the Highlight function draws in colours according to the principles which are discussed below. (Of course, these principles could be applied to drawing with the circle function, and computer code written accordingly.)

Other types of annotation tools, may be used. For example, one annotation tool allows the annotator to type lines of text onto the document, as an annotation.

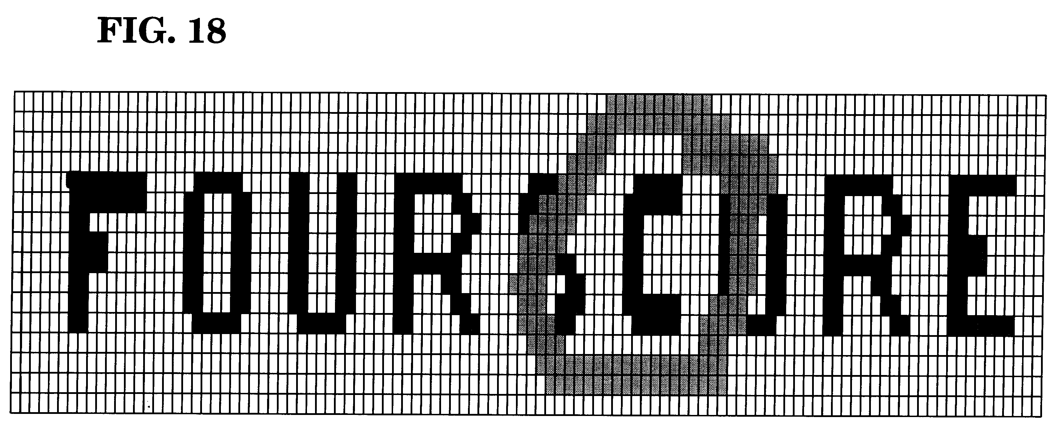

The loop in Figure 17 is in the same color as the text, and obscures the "S" and the "O." If the loop were drawn in a different color than the text, a similar obstruction would occur, as Figure 18 shows.

At least two solutions to these problems are possible, by using a type of ANDing operation when drawing the circle. The phrase "type of ANDing operation" refers to the following general procedure, which provides the following general results. (A general description is given, because a detailed description, which identifies every possible color combination, would be hopelessly complex, because of the enormous number of possible combinations.) The color of the pixels contained in the swath swept by the cursor (when the Highlight function is selected is changed). However, before each pixel color is changed, inquiry is made as to whether the existing pixel color is the same as the background color. If so, indicating that the pixel-about-to-be-changed is part of an image, then that pixel is changed in color, but to a color which is different from both that of the circle and the image.

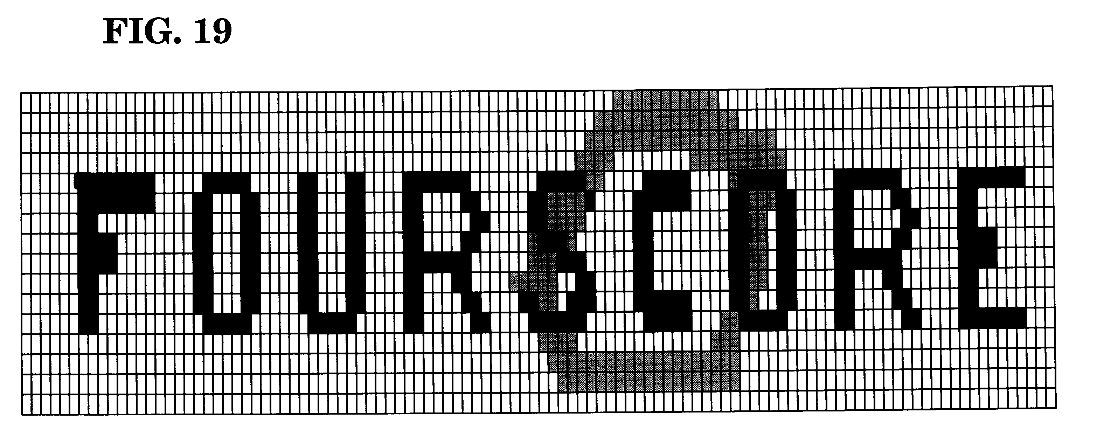

That is, considering Figure 19, four colours are generated:
(1) the background color,
(2) the pre-existing image color ("FOURSCORE" is the image),
(3) the color of the loop's swath crossing the pre-existing image (the loop crosses the "S" and the "O"), and
(4) the color of the loop's swath located outside the pre-existing image.

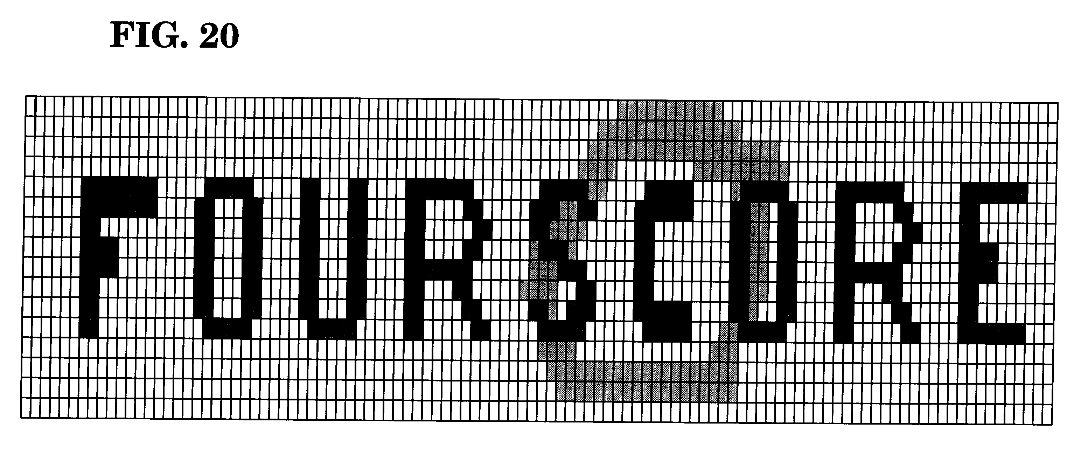

As an alternative, if the pixel-about-to-be-changed is part of an image, then the image-pixel is left intact, producing the result shown in Figure 20. Of course, in the alternative case, if the color of the loop is the same as the color of the pre-existing image, then the situation shown in Figure 17 will occur. This situation can be prevented by disallowing annotation in any colours already existing on the display.

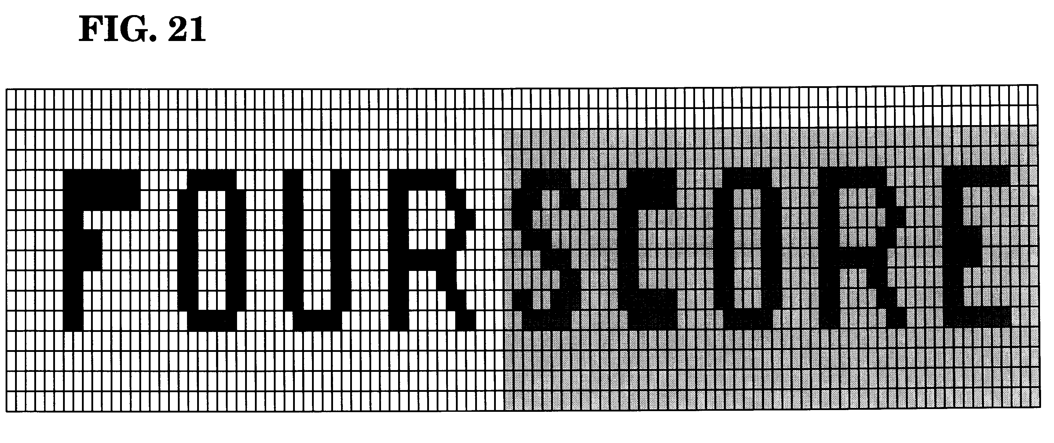

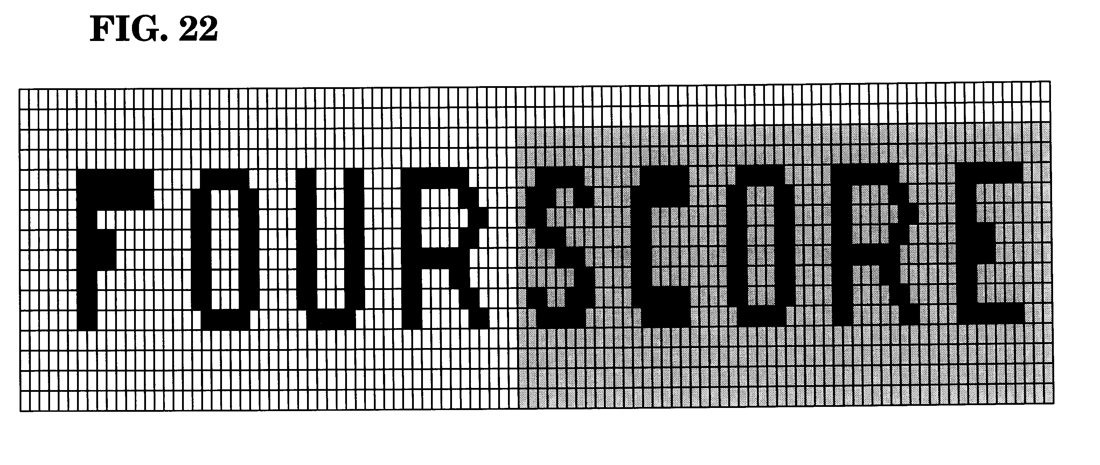

This discussion illustrates how the Highlight function deals with pixel colours, when the highlighting cursor crosses an image, in an arbitrary path. A more conventional concept of highlighting is shown in Figure 21. It should be recognized that this procedure is framed in terms of results. There are numerous different ways to implement software to obtain these results. If an annotator selects Annotation Mode, with the Highlight function, and then sweeps the cursor across the word "SCORE," then the highlighting shown in Figure 21 is produced. An alternate form of highlighting is shown in Figure 22, and corresponds to the type of annotation shown in Figure 20: the color of the pre-existing image is not changed, but only the color of the background surrounding the image.

It has perhaps been implied that the annotator should use a color different from any color used by the annotated image, to prevent the obliteration shown in Figure 17. However, sometimes, such obliteration may be positively desired, as when an image is to be crossed out.

Therefore, to accommodate annotation, both with and without obliteration, several colours of pen are provided, and different types of EX-OR type of operation are used. These combinations allow both (a) opaque highlighting and annotation, which obscures images on the document and (b) transparent, tinted, highlighting and annotation, which does not obscure images on the document.

Different types of EX-ORing can be undertaken with different colours of pens and brushes. For example, if a document contains black images, at least two colours of pen and brush of annotation should be made available. A black pen should be available, for obstruction, and a transparent, tinted pen should be available for highlighting.

For example, a yellow pen would suffice for highlighting, and an EX-ORing operation should be available to provide the type of highlighting shown in Figure. The highlighted word "SCORE" can be made to appear grey, by the EX-OR operation, the remainder of the word is black, and the field surrounding "SCORE" is yellow.

If, in addition, a green pen is added, then, when the green pen crosses a black image, the EX-OR operation should provide another color, preferably not gray. When the green pen crosses a gray image (where the yellow pen already crossed the original image), yet another color should be selected by the EX-OR operation.

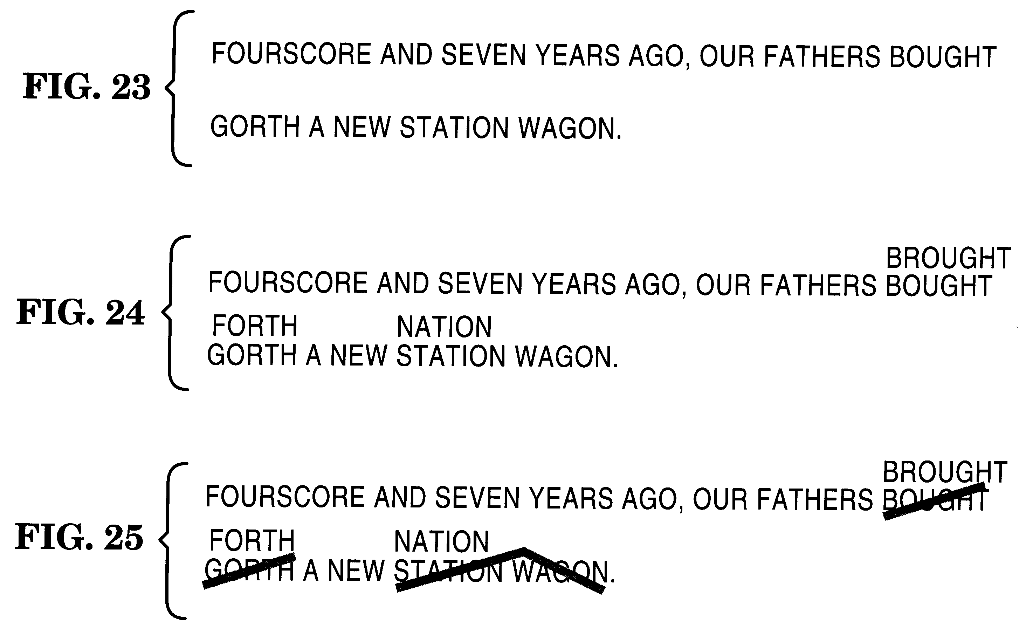

An annotator can select the Annotation Mode, and the Text function. This combination allows the annotator to park the cursor at a selected location, and type an annotation. Figures 23 and 24 illustrate an example. Figure 23 shows the original document. Figure 24 illustrates annotations made using the Text function. Figure 25 illustrates annotations made using the Highlight function (or a drawing function) which cross out incorrect words. The annotated image shown in Figure 25 is stored in a single file (that is, the annotations and the document are not stored at different locations).

An editor will later retrieve the stored, annotated image which is then displayed it in a first window. The editor will run a word processor in a second window. The editor will view the annotated document in the first window, and make corrections on the original document in the second window. Then, the editor will save the edited original document.

This combination of (a) annotation, (b) optional highlighting, and (c) the storage of the annotation/highlight data at a separate location than the document which is annotated provides the following benefits.

First, a window on a display can be annotated, without affecting the contents of either the window or any documents displayed in the window. This allows one to view a "trial run" of changes to the document, without actually committing to the changes. This also allows a participant to emphasize parts of a window, without permanently altering the window's contents.

Second, a participant can make annotations privately, by making them in Local Mode. No one else can see the annotations, and they do not modify the annotated document.

Third, if the annotations are made on a shared window, the annotations appear on the displays of all other conference participants. The data from which the annotations are generated is stored within each participant's computer. Thus, each participant receives a copy of the annotations. Each participant can store the annotated window, on a floppy disc, and later reconstruct the annotated window.

Fourth, a user making annotations can switch out of Annotation Mode and edit the annotated document directly. That is, the annotations can be considered as proofreader's marks. The user can view a document containing proofreader's marks, and simultaneously edit the document. Of course, the editing does not remove the annotations, because removal must be done in Annotation Mode, while editing is done in Application mode. However, the removal of the proofreader's marks is a very simple process. A single, short, sequence of commands removes all annotations at once. Restating the fourth benefit in a different way, a user can generate a document using a word processing program. Then the user submits the document to a remote conference session, wherein many participants see the document at their respective computers. These participants can annotate the document. They can write free-hand notes on the document, as in a "paint" program. They can also use a text mode of annotation, where they park the cursor at a selected location on the document, and type annotations onto the document.

After annotation has terminated, the annotated document can be transferred to an editor. If the editor is a participant, no transfer is necessary. If the editor is not, the annotated document file is transferred to the editor in a known manner. The editor incorporates the annotations into the document by calling up Application Mode, wherein the editor views a single document which bears the collective annotations of all participants. The editor makes the changes indicated by the annotations. The editor then saves the document. Because the document and the annotations are stored at different locations, the saved document is annotation-free, yet conforming to the changes required by the annotations. The editor can also globally delete all annotations.

Fifth, the host may grant, or refuse, permission to annotate to any selected participants.

Sixth, annotation may be made on any windows, including video windows. In the present context, a video window is a bit-mapped image, which is generally drawn by dedicated hardware, such as a video card. A video window is not drawn from GDI calls.

## Claims

1. A computer system including a plurality of interlinked computers, characterized by annotation means adapted to allow users of the computers to make annotations on the common image by highlights on the common image; and storage means adapted to store annotation data at a different location from image data.

2. A computer system according to claim 1, characterized in that said highlights are transparent highlights.

3. A computer system according to claim 1, characterized in that said highlights have the same colour as the portion of the image being highlighted.

4. A computer system according to claim 1, characterized in that said highlights change the colour of the image being highlighted.

5. A computer system according to any one of the preceding claims characterized in that said annotation means is further adapted to allow users of the computers to make annotations on the common image by typing text onto the common image.

6. A computer system according to any one of the preceding claims, characterized in that said annotation means is further adapted to allow users of the computers to make annotations on the common image by drawings lines on the common image.

7. A computer system according to any one of the preceding claims, characterized in that said storage means is adapted to store the annotated document; in that retrieval means are provided for retrieving the annotated document from storage and displaying it; and in that editing means are provided adapted to allow a user to edit the annotated document.

8. A computer system according to claim 7, characterized in that said editing means is adapted to remove all annotations in a single sequence of commands.
